# EUROPÄISCHE PATENTSCHRIFT

(11) **EP 0 803 971 B1**
(45) Veröffentlichungstag und Bekanntmachung des Hinweises auf die Patenterteilung: **27.01.1999**
(21) Anmeldenummer: 96106603.2
(22) Anmeldetag: 26.04.1996
(51) Int. Cl.: H02P 7/622

(54) **Verfahren und Vorrichtung zur druckabhängigen Drehzahlsteuerung eines Einphasen-Induktionsmotors in Lüftungsvorrichtungen und dergleichen**
Method and device for controlling the rotational speed of a single phase induction motor in ventilating devices or the like as a function of pressure
Procédé et dispositif pour commander la vitesse de rotation d'un moteur monophasé à induction dans des dispositifs de ventilisation ou similaire en fonction de pression

(43) Veröffentlichungstag der Anmeldung: 29.10.1997
(73) Patentinhaber: HANNING ELEKTRO-WERKE GMBH & CO., D-33813 Oerlinghausen (DE)
(72) Erfinder: Teipen, Bernd, Dipl.-Ing., D-33102 Paderborn (DE)
(74) Vertreter: TER MEER STEINMEISTER & PARTNER GbR

(56) Entgegenhaltungen:
- EP-A- 0 612 960
- DE-A- 3 419 408
- US-A- 4 762 463
- US-A- 4 992 709
- US-A- 5 200 684
- PATENT ABSTRACTS OF JAPAN Bd. 13, Nr. 189 (M-821) 08 Mai 1989 & JP-A-01 014 533 (HITACHI LTD) 18 Januar 1989

## Beschreibung

Die Erfindung betrifft ein Verfahren zur druckabhängigen Drehzahlsteuerung eines an Wechselspannung angeschlossenen Einphasen-Induktionsmotors in Lüftungsvorrichtungen oder dgl., sowie eine Vorrichtung zur Durchführung dieses Verfahrens (vgl. EP-A-0 612 960).

Verfahren zur Drehzahlregelung von Elektromotoren sind in vielfältiger Form bekannt. Wenn der Elektromotor an eine Einphasen-Wechselspannung angeschlossen ist, erfolgt die Drehzahlregelung des Elektromotors häufig mit Hilfe einer Phasenanschnittsteuerung. Dem Elektromotor ist bei der Phasenanschnittsteuerung beispielsweise ein wie ein Schalter arbeitender Triac vorgeschaltet, der mit seiner Steuerelektrode (Gate) an einen Zündimpulse erzeugenden Impulsgerät angeschlossen ist und für einen bestimmten Zeitraum durchgeschaltet wird, wenn ein Zündimpuls auf die Steuerelektrode des Triacs gegeben wird. Die Durchschaltzeit des Triacs wird begrenzt von einem auf den Nulldurchgang der Wechselspannung bezogenen Zündzeitpunkt für den Zündimpuls, der den Triac in den leitenden Zustand versetzt, und der Unterschreitung eines bestimmten Wertes (Haltestrom) des vom Arbeitspunkt des Elektromotors bestimmten Stromes, die dazu führt, daß der den Triac wieder in den hochohmigen Zustand versetzt wird. Der Zündzeitpunkt wird derart eingestellt, daß die vom Elektromotor aufgenommene Leistung zur Erreichung eines vorgegebenen Drehzahl-Sollwertes ausreicht. Ist der vorgegebene Drehzahl-Sollwert hoch, wird der Zündzeitpunkt für den Zündimpuls derart eingestellt, daß die Durchschaltzeit entsprechend groß ist, während bei einem niedrigeren Drehzahl-Sollwert der Zündzeitpunkt so eingestellt wird, daß die Durchschaltzeit entsprechend kleiner ist.

Zur Steuerung der Drehzahl von Elektromotoren in Lüftungsvorrichtungen werden als Impulsgeräte im allgemeinen Zündbausteine bei der Phasenanschnittsteuerung verwendet, die mit einer elektrischen Zusatzschaltung versehen sind, mit der die Erkennung von Nulldurchgängen der Wechselspannung und eine Messung eines Motorstromes möglich ist. Diese Zündbausteine sind beschränkt auf die Verwendung von Elektromotoren, die unabhängig vom Arbeitspunkt immer ein induktives Verhalten zeigen, das heißt, die Zündbausteine benötigen zur Gewährleistung einer fehlerfreien Funktion immer erst einen Nulldurchgang der Wechselspannung und dann einen verzögerten Nulldurchgang des Stromes. Die Zündbausteine sind also nicht verwendbar für Elektromotoren, die auch ein kapazitives Verhalten aufweisen können, das heißt, daß der Nulldurchgang des Stromes vor dem Nulldurchgang der Wechselspannung liegt.

Anstelle eines Zündbausteins als Impulsgerät zur Erzeugung eines Zündimpulses ist aus der DE 34 19 408 Al ein Verfahren bekannt, bei dem als Impulsgerät ein Mikrocontroller eingesetzt wird, der neben der Durchführung der Synchronisation mit der Netzfrequenz und der Steuerung von Zeitabläufen den Triac ansteuert. Die Drehzahl des Elektromotors wird über einen Tachogenerator erfaßt und dem Mikrocontroller zugeführt. Ein Steuerprogramm vergleicht den erfaßten Drehzahl-Istwert mit einem vorgegebenen Drehzahl-Sollwert und bestimmt den Zündzeitpunkt für einen Zündimpuls zum Durchschalten des Triacs. Das beschriebene Verfahren bezieht sich jedoch nur auf einen an Wechselspannung angeschlossenen Reihenschlußmotor (Universalmotor), der sich in jedem Arbeitspunkt induktiv verhält.

Die beiden angegebenen Verfahren zur Drehzahlsteuerung eines Einphasen-Elektromotors sind somit beschränkt auf Elektromotoren, die unabhängig vom Arbeitspunkt immer ein induktives Verhalten zeigen.

Aufgabe der Erfindung ist es, ein Verfahren und eine Vorrichtung zur Drehzahlsteuerung anzugeben, das sowohl bei induktivem als auch bei kapazitivem Verhalten des Elektromotors anwendbar ist und speziell auf die luftdruckabhängige Drehzahlsteuerung von Einphasen-Induktionsmotoren in Lüftungsvorrichtungen zugeschnitten ist.

Diese Aufgabe wird bei einem Verfahren der obigen Art dadurch gelöst, daß ein Luftdruck-Istwert und ein Luftdruck-Sollwert von einem Mikrocontroller erfaßt und miteinander verglichen werden, daß die Nulldurchgänge der Wechselspannung und eines Motorstroms vom Mikrocontroller erfaßt werden, und daß aus diesen Daten mittels eines Steuerprogramms zur Angleichung des Luftdruck-Istwertes an den Luftdruck-Sollwert ein die Drehzahl beeinflussender, auf einen Nulldurchgang der Wechselspannung bezogener Zündzeitpunkt für einen Zündimpuls ermittelt wird, der dann auf ein die Wechselspannung zum Einphasen-Induktionsmotor durchschaltendes elektronisches Bauelement übertragen wird, wenn der Motorstrom einen Nulldurchgang hat oder abgeklungen ist.

Es ist somit möglich, in Lüftungsvorrichtungen auch die kostengünstig herstellbaren und robusten Einphasen-Induktionsmotoren zu verwenden, die neben einem induktiven bzw. ohmschen Verhalten aufgrund des Betriebskondensators auch ein kapazitives Verhalten aufweisen können.

Der Begriff "kapazitives Verhalten" des Einphasen-Induktionsmotors bezieht sich in diesem Zusammenhang auf den abklingenden Teil des Motorstromes, der seinen Nullwert erreicht hat, bevor die Wechselspannung ihren Nulldurchgang hat. Das kapazitive Verhalten tritt beim Einphasen-Induktionsmotor nur bei angeschnittener Wechselspannung für die Zeit des abklingenden Motorstromes auf.

Mit Hilfe des als Impulsgerät eingesetzten Mikrocontrollers und des erfaßten Luftdruck-Istwertes und Luftdruck-Sollwertes und des Nulldurchganges der Wechselspannung wird vom Steuerprogramm ein auf den Nulldurchgang der Wechselspannung bezogener Zündzeitpunkt für den Zündimpuls bestimmt, der aber erst dann über einen Zündverstärker auf die Steuerelektrode des Triacs übertragen wird, wenn der vom Mikrocontroller erfaßte Motorstrom einen Nulldurchgang hat oder abgeklungen ist. Der Triac schaltet zum Zeitpunkt der Zündung die Wechselspannung auf den Einphasen-Induktionsmotor durch, der, je nach Arbeitspunkt, einen induktiven oder ohmschen Motorstrom aufnimmt. Der Triac, der nach Unterschreitung eines bestimmten Motorstromwertes wieder in den hochohmigen Zustand übergeht, erhält nach Ablauf des errechneten Zündzeitpunktes erneut einen Zündimpuls, wenn zu diesem Zeitpunkt der Motorstrom bereits abgeklungen ist. Ansonsten wird der Zündimpuls zeitlich verschoben, bis vom Steuerprogramm ein Nulldurchgang des Motorstromes festgestellt werden konnte. Der auf die Steuerelektrode des Triac übertragende Zündimpuls schaltet den Triac durch, so daß die Wechselspannung am Einphasen-Induktionsmotor anliegt und erneut ein Motorstrom fließen kann.

Zur Bestimmung des Zündzeitpunktes für einen Zündimpuls ist es wichtig, den Nulldurchgang der Wechselspannung und des Motorstromes zu kennen.

Damit diese Werte ausreichend genau sind, werden von einem Unterprogramm des Steuerprogramms kontinuierlich Eingänge des Mikrocontrollers abgefragt, an denen digitale Signale der Wechselspannung und des Motorstromes anliegen, mit denen die Nulldurchgänge der Wechselspannung und des Motorstromes bestimmt werden können.

Nach der Übertragung des Zündimpulses auf die Steuerelektrode des Triac wird in einem bestimmten Zeitintervall überprüft, ob der übertragende Zündimpuls zur Durchschaltung des Triac geführt hat. Wenn vom Unterprogramm kein Motorstrom festgestellt werden konnte, wird in dem Zeitintervall erneut ein Zündimpuls auf die Steuerelektrode des Triac übertragen, bis der Triac durchschaltet und ein Motorstrom vom Unterprogramm erfaßt wird. Bis zum nächsten Nulldurchgang der Wechselspannung werden keine weiteren Zündimpulse auf die Steuerelektrode des Triac übertragen, so daß trotz der Zündimpulswiederholung gewährleistet ist, daß bei einem kapazitiven Arbeitspunkt des Einphasen-Induktionsmotors keine unerwünschten Zündimpulse erzeugt werden, die zu einem asymmetrischen Stromverlauf führen.

Wenn ein vom Mikrocontroller errechneter Zündzeitpunkt für einen Zündimpuls unmittelbar vor einem Nulldurchgang der Wechselspannung liegt, wird der Zündimpuls nicht übertragen, da eine bei allen Systemen immer vorhandene geringe zeitliche Ungenauigkeit beim Erkennen des Nulldurchgangs der Wechselspannung dazu führen könnte, daß der Zündzeitpunkt für den Zündimpuls real bereits hinter dem Nulldurchgang der Wechselspannung liegt und die nachfolgende Wechselspannungs-Halbwelle somit unbeabsichtigt durchgeschaltet wird. Ein unbeabsichtigtes Durchschalten des Triacs würde in diesem Fall zu einem asymmetrischen Stromverlauf führen, da der Elektromotor eine Halbwelle lang einen Motorstrom aufnimmt, obwohl mit dem errechneten Zündzeitpunkt nur für einen geringen Zeitraum eine Stromaufnahme beabsichtigt ist.

Die Vorrichtung zur luftdruckabhängigen Drehzahlregelung des Einphasen-Induktionsmotors in Lüftungsvorrichtungen setzt sich zusammen aus dem Mikrocontroller, der den Luftdruck-Sollwert und den in der Lüftungsvorrichtung vorhandenen und von einem Luftdruckmeßfühler ermittelten Luftdruck-Istwert, sowie die von einer elektrischen Schaltung in digitale Signale umgewandelten Wechselspannungswerte und Motorstromwerte erfaßt und einen Zündimpuls erzeugt, der über einen Optokoppler und einen Zündverstärker auf den Triac übertragen wird, der die Wechselspannung zum Einphasen-Induktionsmotor durchschaltet.

Die Vorrichtung weist vorzugsweise eine Siebensegment-Anzeige auf, mit der der Effektivwert der Motorspannung und der Luftdruck-Istwert innerhalb der Lüftungsvorrichtung angezeigt werden.

Lüftungsvorrichtungen zeichnen sich unter anderem dadurch aus, daß sie eine Drehmoment-Kennlinie aufweisen, die mit der Drehzahl quadratisch ansteigt. Die vorliegende Erfindung ist daher auch auf andere Lastmaschinen, beispielsweise Umwälzpumpen anwendbar, die ein ähnliches Verhalten des Lastmoments aufweisen.

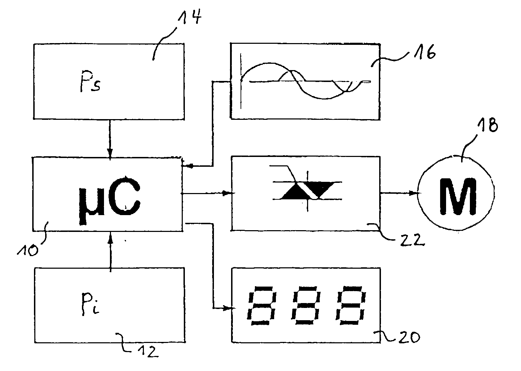

Im folgenden werden bevorzugte Ausführungsbeispiele anhand der Zeichnung näher erläutert.

Die einzige Figur zeigt ein Blockschaltbild einer erfindungsgemäßen Vorrichtung zur luftdruckabhängigen Drehzahlsteuerung eines Einphasen-Induktionsmotors in Lüftungsvorrichtungen.

Die Vorrichtung weist einen Mikrocontroller 10 auf, der ein in einem internen oder externen Speicherbaustein abgelegtes Steuerprogramm kontinuierlich abarbeitet. An den Mikrocontroller 10 sind eine nicht dargestellte Energieversorgung sowie ein externer Taktgeber angeschlossen.

Der Mikrocontroller erhält von einem A/D-Wandler, der die von einem in einer nicht gezeigten Lüftungsvorrichtung angeordneten Luftdruckmeßfühler ermittelten Werte digitalisiert, in regelmäßigen Zeitabständen einen aktuellen Wert. Ein vom Mikrocontroller erfaßter Luftdruck-Istwert 12 wird mit einem Luftdruck-Sollwert 14 verglichen, der ebenfalls vom Mikrocontroller 10 in regelmäßigen Zeitabständen erfaßt wird. Der Luftdruck-Sollwert 14 kann beispielsweise über ein Potentiometer einstellt werden.

Ferner erhält der Mikrocontroller 10 von einem Zwischenverstärker 16 digitalisierte Signale einer Wechselspannung, an der der Einphasen-Induktionsmotor angeschlossen ist und eines Motorstromes, den der Einphasen-Induktionsmotor 18 aufnimmt. Jede Wechselspannungs-Halbwelle wird dabei über einen Widerstand erfaßt, an denen jeweils eine Halbwelle lang eine Spannung abfällt. Über jeweils einen Optokoppler werden zwei Eingänge des Mikrocontrollers entsprechend abwechselnd auf High-Signal bzw. Low-Signal gesetzt, so daß die Wechselspannung gerade dann einen Nulldurchgang hat, wenn der eine Eingang von High auf Low und der andere Eingang von Low auf High gesetzt wird, das heißt, wenn ein Wechsel stattfindet.

Der Nulldurchgang des Motorstromes läßt sich auf ähnliche Weise bestimmen.

Die Vorrichtung weist zu Kontrollzwecken bei einer Inbetriebnahme ferner eine Siebensegment-Anzeige 20 auf, mit der der vom Steuerprogramm berechnete Effektivwert der Motorspannung und der Luftdruck-Istwert 12 im Multiplex-Verfahren angezeigt werden. Eine Inbetriebnahme einer Lüftungsvorrichtung wird zusätzlich erleichtert, da die Siebensegment-Anzeige 20 anstelle des Luftdruck-Istwertes 12 den Luftdruck-Sollwert 14 anzeigt, wenn das Potentiometer zur Einstellung des Luftdruck-Sollwertes verstellt wird.

Mit Hilfe des erfaßten Luftdruck-Istwertes 12, des eingestellten Luftdruck-Sollwertes 14 und des Nulldurchganges der Wechselspannung wird vom Steuerprogramm über einen PI-Regelalgorithmus ein auf den Nulldurchgang der Wechselspannung bezogener Zündzeitpunkt für einen Zündimpuls bestimmt, der aber erst dann über einen nicht gezeigten Optokoppler und einen Zündverstärker auf die Steuerelektrode eines elektronischen Bauelements 22, beispielsweise eines Triac, übertragen wird, wenn der vom Mikrocontroller 10 erfaßte Motorstrom einen Nulldurchgang hat oder abgeklungen ist.

Der Triac schaltet zum Zeitpunkt der Zündung die Wechselspannung auf den Einphasen-Induktionsmotor 18 durch, der, je nach Arbeitspunkt, einen induktiven oder ohmschen Motorstrom aufnimmt. Der Triac 22, der nach Unterschreitung eines bestimmten Motorstromwertes wieder in den hochohmigen Zustand übergeht, erhält nach Ablauf des errechneten Zündzeitpunktes erneut einen Zündimpuls, wenn zu diesem Zeitpunkt der Motorstrom bereits abgeklungen ist. Ansonsten wird der Zündimpuls verschoben, bis vom Steuerprogramm ein Nulldurchgang des Motorstromes festgestellt werden konnte. Der auf die Steuerelektrode des Triac übertragende Zündimpuls schaltet den Triac durch, so daß die Wechselspannung am Einphasen-Induktionsmotor 18 anliegt und erneut ein Motorstrom fließen kann.

Der Zündzeitpunkt für den Zündimpuls wird derart vorgegeben, daß die insgesamt dem Einphasen-Induktionsmotor 18 zugeführte Leistung zur Erhöhung bzw. Erniedrigung und damit zur Angleichung des Luftdruck-Istwertes 12 an den Luftdruck-Sollwert 14 ausreicht. Eine Korrektur des vom Steuerprogramm ermittelten Zündzeitpunktes für den Zündimpuls ist während der Angleichung des Istwertes an den Sollwert ohne weiteres möglich, da das Steuerprogramm in festen Zeitintervallen Werte des Luftdruck-Istwertes 12 erhält und einen neuen Zündzeitpunkt berechnet. Werden beispielsweise Lüftungsklappen der Lüftungsvorrichtung geöffnet oder geschlossen, so ändert sich kurzzeitig der Luftdruck innerhalb der Lüftungsvorrichtung. Die Differenz zwischen Luftdruck-Istwert 12 und Luftdruck-Sollwert 14 wird entsprechend größer oder kleiner, so daß ein neuer Zündzeitpunkt für die Zündimpulse vorgegeben wird und eine Angleichung erfolgen kann.

Damit die erfaßten Wechselspannungs- und Motorstrom-Nulldurchgänge für die zu berechnenden Zündzeitpunkte ausreichend genau sind, wird kontinuierlich ein Unterprogramm des Steuerprogramms gestartet, das die Eingänge überprüft, an denen die High- bzw. Low-Signale der Wechselspannung und des Motorstromes anliegen.

Nach der Übertragung des vom Mikrocontroller erzeugten Zündimpulses auf die Steuerelektrode des Triacs wird in bestimmten Zeitintervallen überprüft, ob der übertragende Zündimpuls zur Durchschaltung des Triacs ausreichend war. Wenn vom Unterprogramm kein Motorstrom festgestellt werden konnte, wird in dem Zeitintervall erneut ein Zündimpuls auf die Steuerelektrode übertragen, bis der Triac durchschaltet und ein Motorstrom vom Unterprogramm erfaßt wird. Bis zum nächsten Nulldurchgang der Wechselspannung werden keine weiteren Zündimpulse auf die Steuerelektrode übertragen, so daß trotz der Zündimpulswiederholung gewährleistet ist, daß beim kapazitiven Arbeitspunkt des Einphasen-Induktionsmotors 18 keine unerwünschten Zündimpulse erzeugt werden.

Wenn ein vom Mikrocontroller 10 errechneter Zündzeitpunkt für einen Zündimpuls unmittelbar vor einem Nulldurchgang der Wechselspannung liegt, wird der Zündimpuls unterdrückt, da eine bei allen Systemen immer vorhandene, geringe zeitliche Ungenauigkeit beim Erkennen des Nulldurchgangs der Wechselspannung dazu führen könnte, daß der Zündzeitpunkt für den Zündimpuls real bereits hinter dem Nulldurchgang der Wechselspannung liegt und die nachfolgende Wechselspannungs-Halbwelle somit unbeabsichtigt durchgeschaltet wird. Entsprechend würde der Einphasen-Induktionsmotor eine Halbwelle lang einen Motorstrom aufnehmen, so daß insgesamt ein unsymmetrischer Stromverlauf vorhanden wäre.

Das hier beschriebene Verfahren zur luftdruckabhängigen Drehzahlregelung läßt sich natürlich auch auf Elektromotoren übertragen, die in jedem Arbeitspunkt ein induktives Verhalten zeigen.

Ferner kann anstelle eines Mikrocontrollers bei entsprechender Beschaltung ein Mikroprozessor eingesetzt werden, so daß das Verfahren ebenfalls durchführbar ist.

## Patentansprüche

1. Verfahren zur druckabhängigen Drehzahlsteuerung eines an Wechselspannung angeschlossenen Einphasen-Induktionsmotors (1 Lüftungsvorrichtungen oder dgl. wobei ein Luftdruck-Istwert (12) und ein Luftdruck-Sollwert (14) von einem Mikrocontroller (10) erfaßt und miteinander verglichen werden, dadurch **gekennzeichnet**, daß die Nulldurchgänge der Wechselspannung und eines Motorstroms vom Mikrocontroller (10) erfaßt werden, und daß aus diesen Daten mittels eines Steuerprogramms zur Angleichung des Luftdruck-Istwertes (12) an den Luftdruck-Sollwert (14) ein die Drehzahl beeinflussender, auf einen Nulldurchgang der Wechselspannung bezogener Zündzeitpunkt für einen Zündimpuls ermittelt wird, der dann auf ein die Wechselspannung zum Einphasen-Induktionsmotor (18) durchschaltendes elektronisches Bauelement (22) übertragen wird, wenn der Motorstrom einen Nulldurchgang hat oder abgeklungen ist.

2. Verfahren nach Anspruch 1, dadurch **gekennzeichnet**, daß die Erzeugung des Zündimpulses solange wiederholt wird, bis ein Stromfluß im Einphasen-Induktionsmotor (18) festgestellt wird.

3. Verfahren nach Anspruch 1 oder 2, dadurch **gekennzeichnet**, daß nach erfolgter Zündung des elektronischen Bauelements (22) bis zum nächsten Nulldurchgang der Wechselspannung keine Zündimpulse übertragen werden.

4. Verfahren nach einem der vorherigen Ansprüche, dadurch **gekennzeichnet,** daß ein Zündimpuls unterdrückt wird, wenn das Steuerprogramm einen Zündzeitpunkt bestimmt hat, der unmittelbar vor einem Nulldurchgang der Wechselspannung liegt.

5. Vorrichtung zur Durchführung des Verfahrens nach Anspruch 1, mit einem Einphasen-Induktionsmotor (18), dessen Drehzahl in Abhängigkeit von einem Luftdruck in einer Lüftungsvorrichtung steuerbar ist, einem Mikrocontroller (10) zur Erfassung des Luftdruck-Sollwertes (14) und des in der Lüftungsvorrichtung vorhandenen und von einem Luftdruckmeßfühler ermittelten Luftdruck-Istwertes (12), mit einer elektrischen Schaltung (16) zur Erfassung und Weiterleitung von Wechselspannungs- und Motorstromwerten an den Mikrocontroller (10), und einem elektronischen Bauelement (22), das zur Durchschaltung der Wechselspannung über einen Optokoppler und einen Zündverstärker vom Mikrocontroller (10) angesteuert wird.

6. Vorrichtung nach Anspruch 5, dadurch **gekennzeichnet**, daß das elektronische Bauelement (22) zur Durchschaltung der Wechselspannung ein Triac ist.

7. Vorrichtung nach einem der Ansprüche 5 oder 6, durch **gekennzeichnet**, daß eine Siebensegment-Anzeige vorgesehen ist, mit der der Effektivwert der Motorspannung und der Luftdruck-Istwert (12) oder der Luftdrucksollwert (14) anzeigbar sind.

## Claims

1. Method for the pressure-dependent speed control of a single-phase induction motor (18), connected to alternating voltage, in ventilation devices or the like, an air pressure actual value (12) and an air pressure desired value (14) being determined and compared with one another by a microcontroller (10), characterised in that the zero crossings of the alternating voltage and of a motor current are determined by the microcontroller (10) and in that, from those data, an ignition point, which affects the speed and is relative to a zero crossing of the alternating voltage, is ascertained for a firing pulse by means of a control programme for adjusting the air pressure actual value (12) to the air pressure desired value (14) and is then transmitted, when the motor current has a zero crossing or has subsided, to an electronic component (22) connecting the alternating voltage to the single-phase induction motor (18).

2. Method according to claim 1, characterised in that the generation of the firing pulse is repeated until a current flow is detected in the single-phase induction motor (18).

3. Method according to claim 1 or 2, characterised in that, after ignition of the electronic component (22), no firing pulses are transmitted until the next zero crossing of the alternating voltage.

4. Method according to any one of the preceding claims, characterised in that a firing pulse is suppressed if the control programme has determined an ignition point which is directly before a zero crossing of the alternating voltage.

5. Apparatus for carrying out the method according to claim 1, having a single-phase induction motor (18) whose speed is controllable as a function of air pressure in a ventilation device, and having a microcontroller (10) for the determination of the air pressure desired value (14) and of the air pressure actual value (12) which is present in the ventilation device and determined by an air pressure sensor, and having an electrical circuit (16) for the determination and feeding of alternating voltage and motor current values to the microcontroller (10), and having an electronic component (22) which is controlled by the microcontroller (10) for the connection of the alternating voltage via an optical coupler and an ignition amplifier.

6. Apparatus according to claim 5, characterised in that the electronic component (22) for the connection of the alternating voltage is a triac.

7. Apparatus according to either claim 5 or claim 6, characterised in that a seven-segment display is provided by means of which the effective value of the motor voltage and the air pressure actual value (12) or the air pressure desired value (14) can be displayed.

## Revendications

1. Procédé pour réguler, en fonction d'une pression, la vitesse de rotation d'un moteur monophasé à induction (18) connecté à une tension alternative dans des dispositifs de ventilation ou similaires, une valeur effective de pression d'air (12) et une valeur de consigne de pression d'air (14) étant enregistrées et comparées entre elles par une micro-unité de commande (10), caractérisé en ce que les passages par zéro de la tension alternative et d'un courant de moteur sont enregistrés par la micro-unité de commande (10), et en ce qu'à partir de ces valeurs, au moyen d'un programme de commande visant à amener la valeur effective de pression d'air (12) au niveau de la valeur de consigne de pression d'air (14), est calculé un point d'amorçage qui influe sur la vitesse de rotation et se réfère à un passage par zéro de la tension alternative et qui est destiné à une impulsion d'amorçage transmise ensuite à un composant électronique (22) qui transmet la tension alternative au moteur monophasé à induction (18) lorsque le courant de moteur passe par zéro ou a décru.

2. Procédé selon la revendication 1, caractérisé en ce que la production de l'impulsion d'amorçage est répétée jusqu'à ce qu'une conduction de courant soit constatée dans le moteur monophasé à induction (18).

3. Procédé selon la revendication 1 ou 2, caractérisé en ce que, une fois l'amorçage du composant électronique (22) effectué, aucune impulsion d'amorçage n'est transmise jusqu'au prochain passage par zéro de la tension alternative.

4. Procédé selon une des revendications précédentes, caractérisé en ce qu'une impulsion d'amorçage est neutralisée si le point d'amorçage défini par le programme de commande se trouve juste avant un passage par zéro de la tension alternative.

5. Dispositif pour mettre en oeuvre le procédé selon la revendication 1, comprenant un moteur monophasé à induction (18), dont la vitesse de rotation peut être régulée en fonction d'une pression d'air dans un dispositif de ventilation, une micro-unité de commande (10) pour enregistrer la valeur de consigne de pression d'air (14) et la valeur effective de pression d'air (12) mesurée dans le dispositif de ventilation par un capteur de pression d'air, un circuit électrique (16) pour enregistrer et transmettre les valeurs de tension alternative et de courant de moteur à la micro-unité de commande (10), et un composant électronique (22) qui est mis en circuit pour transmettre la tension alternative à partir de la micro-unité de commande (10) à travers un coupleur optique et un amplificateur d'amorçage.

6. Dispositif selon la revendication 5, caractérisé en ce que le composant électronique (22) destiné à transmettre la tension alternative est un triac.

7. Dispositif selon l'une des revendications 5 ou 6, caractérisé en ce qu'il est prévu un moyen d'affichage à sept segments permettant d'afficher la valeur effective de la tension du moteur et la valeur effective de pression d'air (12) ou la valeur de consigne de pression d'air (14).
